Europäisches Patentamt

European Patent Office

Office européen des brevets

(19)

(11) Veröffentlichungsnummer: **0 047 856**
**B1**

(12) **EUROPÄISCHE PATENTSCHRIFT**

(45) Veröffentlichungstag der Patentschrift:
**03.10.84**

(51) Int. Cl.³: **C 01 B 31/32**

(21) Anmeldenummer: **81106155.5**

(22) Anmeldetag: **06.08.81**

(54) Verfahren zur Herstellung von Calciumcarbid.

(30) Priorität: **17.09.80 DE 3035026**

(43) Veröffentlichungstag der Anmeldung:
**24.03.82 Patentblatt 82/12**

(45) Bekanntmachung des Hinweises auf die Patenterteilung:
**03.10.84 Patentblatt 84/40**

(84) Benannte Vertragsstaaten:
**BE DE FR GB NL**

(56) Entgegenhaltungen:
**DE - A - 2 925 897**
**DE - B - 1 207 355**
**DE - C - 421 268**
**DE - C - 956 579**
**DE - C - 1 025 842**
**FR - A - 605 530**

**CHEMIE-ING.-TECHN., Band 46, Nr. 4, 1974, G. STRAUSS "Calciumcarbid bzw. Acetylen und ihre Zukunft", Seiten 132 bis 134**
**CHEMIE-ING.-TECHN., Band 28, Nr. 1, 1956, Seiten 4 bis 5**
**HARTMANN, SCHIRMER, SLINKO - "PROBLEME DER MODERNEN CHEMISCHEN TECHNOLOGIE, AKADEMIE-VERLAG, BERLIN 1980, S. 90**

(73) Patentinhaber: **HOECHST AKTIENGESELLSCHAFT, Postfach 80 03 20, D-6230 Frankfurt am Main 80 (DE)**
Patentinhaber: **RHEINISCHE BRAUNKOHLENWERKE AG., Postfach 41 08 40, D-5000 Köln 41 (DE)**

(72) Erfinder: **Kersting, Hans-Joachim, Dr., Zur Ville 7, D-5020 Frechen (DE)**
Erfinder: **Wolfrum, Erhard, Dr., Neue Aue 6, D-5160 Düren (DE)**
Erfinder: **Portz, Willi, Dr., Zum Schlagbaum 2, D-5042 Erftstadt (DE)**
Erfinder: **Strauss, Georg, Dr., Finkenweg 8, D-5042 Erftstadt (DE)**

(74) Vertreter: **Hubbuch, Klaus, Dr. et al, HOECHST AKTIENGESELLSCHAFT Werk Knapsack, D-5030 Hürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Herstellung von Calciumcarbid durch Umsetzung von überschüssigem Koks mit gebranntem Kalk in Gegenwart von Sauerstoff in einem Sauerstoff-thermischen Ofen, auch Carbothermischer Ofen genannt, ist z.B. aus Chemie-Ingenieur-Technik 28 (1956), 4–5, bekannt.

Das Verfahren hat den Nachteil, dass die Energie zur Sauerstofferzeugung aus Luft – sofern Wasserkraft nicht zur Verfügung steht – durch Vorschaltung eines Dampfkreislaufs auf Kondensationsbasis oder auch eines Gaskreislaufs gedeckt werden muss. Dabei kann jedoch schon theoretisch nur ein Wirkungsgrad von höchstens 45% erzielt werden. Die üblicherweise erreichten Wirkungsgrade liegen zwischen 30 und 38%.

Die DE-A-29 25 897 beschreibt bereits ein Verfahren zur Gewinnung von Calciumcarbid durch Umsetzung von Koks mit Kalk in Gegenwart von Sauerstoff in einem Sauerstoff-thermischen Ofen, wobei man Kohle in einem Herdofen bei Abgastemperaturen von mindestens 750 °C verkokt, den so erhaltenen Koks mit der ihm noch innewohnenden Temperatur von über 500 °C unmittelbar dem Sauerstoff-thermischen Ofenprozess zuführt und in dem Sauerstoff-thermischen Ofen unter Zusatz von Kalk und Sauerstoff Calciumcarbid gewinnt. Dabei kann man die Abwärme des Herdofens und des Sauerstoff-thermischen Ofens zur Erzeugung von Dampf ausnutzen, der seinerseits zur Gewinnung des Sauerstoffs und zur Vortrocknung der im Herdofen eingesetzten Kohle benutzt werden kann. Durch die Verknüpfung der geschilderten Verfahrensschritte konnte der Wirkungsgrad auf etwa 80% angehoben werden. Hierbei wird die erforderliche Energie durch Anwendung eines sogenannten «Gegendruckprozesses» gewonnen, d.h. man betreibt mit dem erzeugten überhitzten Hochdruckdampf eine Turbine, auf deren «Gegenseite» heisser Niederdruckdampf ausströmt, der zur Vortrocknung der Kohle und zu anderen Zwecken verwendet wird. Die Aufgabe heissen Kokses in den Sauerstoff-thermischen Ofen gemäss der DE-A-29 25 897 führt zur Ersparnis der zur Aufheizung des Kokses bis zur Aufgabetemperatur erforderlichen Wärme.

In der DE-A-29 25 897 ist auch bereits beschrieben, dass der heisse Herdofenkoks mit gebranntem Kalk (CaO) gemischt und erst das Gemisch dem Reaktionsgefäss des Sauerstoff-thermischen Ofens zugeführt werden kann, wobei man dem heissen Koks soviel gebrannten Kalk zu dessen Vorab-Aufheizung zuführt, dass die Temperatur des Kalk-Koks-Gemisches vor Eintritt in das Reaktionsgefäss bei etwa 600 °C oder darunter liegt.

Bei der Carbiderzeugung wird der erforderliche Kalk den Öfen in Form von Calciumoxid (CaO) zugeführt, welches an anderer Stelle entweder durch Brennen (Decarbonisieren) von Kalkstein (Calciumcarbonat, $CaCO_3$) oder durch Dehydratisieren des bei der Karbidvergasung anfallenden Kalkhydrats (Calciumhydroxid, $Ca(OH)_2$) gewonnen wird. Im Falle der Dehydratisierung kann ein Calciumkreislauf aufgebaut werden (sog. «Rückkalk»).

Es ist nun Zweck der Erfindung, den Wirkungsgrad des Verfahrens weiter auf 85 bis 90% zu steigern, indem man nicht nur – wie im Verfahren der DE-A-29 25 897 – die Darstellung des Kokses aus Kohle, z.B. grubenfeuchter Braunkohle, und gegebenenfalls die Vorwärmung des gebrannten Kalks, sondern auch die Darstellung des gebrannten Kalks aus Kalkstein oder Kalkhydrat in das Verfahren der Carbidherstellung energiemässig miteinbezieht. Das Verfahren der Erfindung wird dadurch ermöglicht, dass auch beim Verfahren der DE-A-29 25 897 noch ein Energieüberschuss verbleibt, der von der eingesetzten Kohleart abhängig ist und im Verfahren selbst nicht mehr nutzbar gemacht werden kann, sondern nur noch in Kondensationsturbinen mit einem Wirkungsgrad von etwa 35%. Dieser Energieüberschuss lässt sich jetzt erfindungsgemäss für die Decarbonisierung oder Dehydratisierung des Calciumträgers zu CaO einsetzen, wofür keine zusätzlichen Einrichtungen erstellt oder betrieben werden müssen, da die Verkokung des Kohlenstoffträgers sowie die Dehydratisierung/Decarbonisierung (Calcinierung) des Calciumträgers gleichzeitig in den gleichen Einrichtungen erfolgen. Hierbei verhindert die direkte Verbindung des Calcinators/Verkokers (Herdofen) zum Carbidofen eine Rehydratisierung des CaO.

Der Energieüberhang beim Verfahren der DE-A-29 25 897 und beim erfindungsgemässen Verfahren rührt daher, dass einerseits beim Verkoken und Calcinieren unter Luftzufuhr flüchtige Bestandteile der Kohle, z.B. Kohlenwasserstoffe, und andererseits im Sauerstoff-thermischen Ofen mit Zufuhr reinen Sauerstoffs ein Teil des Kokses verbrennt, wobei grosse Energiemengen frei werden, die es möglichst vollständig und mit hohem Wirkungsgrad zu nutzen gilt.

Aus der DE-C-956 579 ist ein Verfahren zur Vorbereitung des Einsatzgutes für die Karbidherstellung im elektrischen Lichtbogenschmelzofen bekannt, worin ein Gemisch aus Kalkhydrat oder Kalkstein mit bituminöser Kohle zu Formlingen gepresst, getrocknet und in Gegenwart heisser Luft verkokt und kalziniert wird. Dabei kann die in den Abgasen des Verkokungs- und Kalzinierungsvorganges enthaltene Wärme zur Trocknung der Formstücke und für die Vorwärmung der Zusatzluft ausgenutzt werden.

Die DE-C-1 025 842 beschreibt ein kontinuierliches Verfahren zur Herstellung von Calciumcarbid aus CaO oder $CaCO_3$ und Kohle oder Koks, wobei die Mischung der Ausgangsstoffe zunächst zur Verkokung und Kalzinierung durch einen horizontalen Drehrohrofen und dann durch einen gasdicht anschliessenden Lichtbogenofen, in dem die Carbidbildung stattfindet, geführt wird. Die bei der Verkokung und bei der Carbidbildung entstehenden heissen, kohlenstoffhaltigen Gase können unter Verbrennung zur Vorheizung der Ausgangsmischung im Drehrohrofen verwendet werden.

Beide Verfahren verwenden keine Braunkohle, benötigen stückige Ausgangsstoffe für die Elektroöfen und liefern kein verwendungsfähiges Synthesegas. Die Energiebilanz ist völlig unbefriedigend, denn die heissen Abgase werden nicht zur Erzeugung von überhitztem Hochdruckdampf aus Kesselspeisewasser verwendet, der seinerzeit eine Stromerzeugung ermöglicht, geschweige denn den Strom zur Betreibung der Elektroöfen bereitstellt.

Im einzelnen betrifft die Erfindung nunmehr ein Verfahren zur Herstellung von Calciumcarbid durch Umsetzung von überschüssigem Koks mit gebranntem Kalk in Gegenwart von Sauerstoff in einem Sauerstoff-thermischen Ofen, welches dadurch gekennzeichnet ist, dass man Braunkohle als Ausgangsstoff für Koks und Kalkhydrat ($Ca(OH)_2$) oder Kalkstein ($CaCO_3$) als Ausgangsstoff für gebrannten Kalk, beide in vorgebrochener Form, mischt, die Mischung in einer Trockenzone bei 80 bis 120 °C von anhaftendem Wasser befreit und das warme Trockengut unmittelbar einem Calcinator zuführt, worin man unter Zuleiten von Luft bei Temperaturen von 900 bis 1400 °C den Braunkohleanteil verkokt und zugleich den Kalkanteil dehydratisiert bzw. decarbonisiert; dass man die thermisch vorbehandelte Mischung der Ausgangsstoffe mit der ihr innewohnenden Temperatur von 900–1000 °C unmittelbar dem Sauerstoff-thermischen Ofen zuführt und dort in Gegenwart von Sauerstoff zu Calciumcarbid umsetzt; dass man die Abwärme des Calcinators zur Erzeugung von überhitztem Hochdruckdampf aus Kesselspeisewasser verwendet, und dass man mit dem überhitzten Hochdruckdampf eine Turbine betreibt, welche sowohl zur Tieftemperaturzerlegung von Luft zwecks Gewinnung des zum Betrieb des Sauerstoff-thermischen Ofens erforderlichen Sauerstoffs als auch zur Stromerzeugung eingesetzt wird, wobei auf der Gegenseite der Turbine heisser Niederdruckdampf anfällt, der mindestens teilweise der Trockenzone zur Trocknung der gemischten Ausgangsstoffe zugeleitet wird.

Das Verfahren der Erfindung kann weiterhin bevorzugt und wahlweise dadurch gekennzeichnet sein, dass man

a) als Calcinator einen Herdofen einsetzt,

b) grubenfeuchte Braunkohle vor dem Zusammenmischen mit dem Kalk auf eine Korngrösse von 0–10 mm zerkleinert,

c) das Kalkhydrat oder den Kalkstein in einer Korngrösse von 0–10 mm einsetzt.

d) in der Trockenzone anfallendes Kondensat abzieht, mit den Abgasen des Sauerstoff-thermischen Ofens vorwärmt und als Kesselspeisewasser zur Erzeugung überhitzten Hochdruckdampfes mit Hilfe der Abwärme des Calcinators verwendet.

e) das bei der Umsetzung von Carbid mit Wasser unter Bildung von Acetylen anfallende Kalkhydrat als Ausgangsstoff für gebrannten Kalk, gegebenenfalls nach Brikettierung, in das Verfahren zur Herstellung von Carbid zurückführt und mit der vorgebrochenen Kohle noch vor Eintritt in die Trockenzone mischt.

Das Verfahren der Erfindung wird nachfolgend anhand des beigefügten Fliessschemas unter braunkohlespezifischen Randbedingungen erläutert, ohne im einzelnen auf die dargestellte und beschriebene Gesamtkombination beschränkt zu sein.

Die grubenfeuchte Rohkohle wird in der Nasszone (1) durch Mahlen und Sieben oder Sichten auf eine zur Trocknung geeignete Korngrösse von z.B. 0 bis 10 mm zerkleinert. Anschliessend wird der Calciumträger – gegebenenfalls nach Stückigmachung in der Brikettieranlage (3) auf z.B. eine Körnung von ebenfalls 0–10 mm – über die Transportleitung (4) herangeführt, mit dem Kohlenstoffträger in der Transportleitung (2) vereinigt und die Mischung der Trockenzone (5) zugeführt. Dort wird der Kohlenstoffträger durch Erwärmung der Mischung auf z.B. 100 °C bis auf etwa 14 Gew.-% Restfeuchte getrocknet. Gleichzeitig wird dem Calciumträger eine etwaige Restfeuchte entzogen. Die hierzu erforderliche Wärme wird dem Niederdruckdampf aus der Gegendruckturbine (6) entnommen. Die bei der Trocknung anfallenden Brüden werden über Leitung (7) abgeführt. Das anfallende Dampfkondensat wird über Leitung (8) abgeführt, mit Pumpe (24) unter hohen Druck gesetzt, im Wärmetauscher (9) vorgewärmt und dem Abhitzekessel (10) zugeleitet. Die getrockneten Kohlenstoff- und Calcium-Träger können auch gemeinsam in der Brikettieranlage (3) zerkleinert und geformt werden, wobei im Falle der Braunkohle ihre bindemittellose Brikettierbarkeit ausnutzbar ist. Im Falle der gemeinsamen Brikettierung entfällt die zuvor erwähnte Brikettierung des Ca-Trägers. Die vorgewärmte und getrocknete Mischung des Kohlenstoff/Calcium-Trägers wird in warmem Zustand dem Calcinator (11), vorzugsweise einem Herdofen, aber auch Kammerofen, Drehrohrofen oder Spülgasofen, zugeführt.

Bei Verwendung eines Herdofens wird diesem von oben her über Leitung (12) heisse Luft zugeführt, welche die Entgasung der Kohle (Verkokung) und die Wasserabspaltung aus Kalkhydrat (Calcinierung) bewirkt. Die flüchtigen Nebenprodukte der Kohle verbrennen dabei und entwickeln eine derartige Abwärme, dass sich die zuströmende kalte Luft sofort erhitzt. Auf diese Weise wird auch die Kohle/Kalkhydrat-Mischung aufgeheizt, wobei der Wirkungsgrad der Energieübertragung hoch ist. Ab etwa 300 °C beginnt die Entgasung der Kohle, die sich bis etwa 900 °C fortsetzt. Das Kalkhydrat beginnt ab etwa 450 °C zu dehydratisieren, wobei das Calciumoxid weiter bis auf etwa 900 °C beheizt wird. Die den Herdofen (11) verlassenden, etwa 1100 bis 1400 °C heissen Abgase, die überwiegend aus Stickstoff, Kohlendioxid und Wasserdampf bestehen, können im Abhitzekessel (10) als Wärmeübertragungsmedium genutzt werden.

Bei Kohle/Kalkstein ($CaCO_3$)-Mischungen laufen die thermischen Vorgänge für die Kohle in gleicher Weise ab. Der Calcinator bzw. Herdofen (11) wird jedoch für eine Bettemperatur von etwa 1000 °C ausgelegt. Die Umwandlung des CaCO₃ zu CaO erfolgt bei 900 bis 1000 °C.

Die Abwärme aus dem Calcinator (11) wird im Abhitzekessel (10) zur Erzeugung von überhitztem Hochdruckdampf genutzt, welcher aus dem über Leitung (8) herangeführten Speisewasser gewonnen wird, das den Abhitzekessel (10) in einer Heizschlange durchströmt und dabei von den heissen Abgasen indirekt aufgeheizt wird. Die abgekühlten Abgase verlassen den Abhitzekessel über Leitung (25). Der überhitzte Hochdruckdampf mit z.B. 90 bar Druck gelangt über Leitung (13) in die Gegendruckturbine (6) und von dort als heisser Niederdruckdampf mit z.B. 5 bar Druck zumindest teilweise in die Trockenzone (5) zurück. Der Rest des Niederdruckdampfes wird über Leitung (14) einer Kondensationsturbine zugeführt und dort mit geringem Wirkungsgrad in Elektroenergie überführt oder direkt zu Wärmezwecken genutzt. Eine entsprechende Menge Speisewasser wird dem System über Leitung (23) in Leitung (8) wieder zugeführt.

Die in der Turbine (6) gewonnene mechanische Energie wird teils im Generator (15) in Elektroenergie umgewandelt und teils zum Betrieb einer Tieftemperaturzerlegung (16) von Luft zwecks Gewinnung von Sauerstoff ausgenutzt.

Die aus dem Calcinator (11) mit einer Temperatur von 900–1000 °C abgezogene C/CaO-Mischung wird unmittelbar dem Sauerstoff-thermischen Carbidofen (17) zugeführt. Ausserdem wird über Leitung (18) Sauerstoff aus der Tieftemperaturzerlegung (16) eingeblasen, der die Verbrennung des überschüssigen Kokses herbeiführt, wodurch die Energie für die endotherme Reaktion

$$462 \text{ Kilo-Joule} + CaO + 3\,C \xrightarrow{\ >1600\ °C\ } CaC_2 +$$

CO wird im Heisszyklon (19) entstaubt und über Leitung (20) dem Wärmetauscher (9) zur Aufwärmung von Kesselspeisewasser zugeführt. Nach teilweiser Abkühlung kann das Abgas zu Synthesegas konvertiert oder zu Heizzwecken herangezogen werden. Sofern das im Ofen (17) gewonnene Calciumcarbid nicht zu anderen Zwecken verwendet wird, kann es der Karbidvergasung (21) unter Gewinnung von Acetylen zugeführt werden. Das hierbei anfallende Kalkhydrat (Rückkalk) kann im Kreislauf über Transportleitung (4) wiederum mit Rohkohle gemischt werden. Steht kein Rückkalk zur Verfügung oder soll von Kalkstein (CaCO₃) ausgegangen werden, so wird der gewünschte Calciumträger jeweils frisch über die Transportleitungen (22) und (4) dem System zugeführt.

Beispiel 1

136,54 t/h Rohbraunkohle (Wassergehalt 60 Gew.-%) werden in der Nasszone (1) auf eine Korngrösse von 0–10 mm gemahlen, mit 19,9 t/h Kalkhydrat (Korngrösse 0–10 mm, 2 Gew.-% Restfeuchte) gemischt und die Mischung in der Trockenzone (5) zu 63,75 t/h Trockenkohle (Wassergehalt 14 Gew.-%) und 19,5 t/h Kalkhydrat getrocknet. Hierzu wird die Trockenzone mit 108,6 t/h Niederdruckdampf von 5 bar und 180 °C beaufschlagt, während 73,19 t/h Brüden und 108,6 t/h Kondensat aus der Trockenzone (5) abströmen. Dem Kondensat in Leitung (8) werden über Leitung (23) 71,4 t/h Speisewasser zugeschlagen, das Gemisch (180 t/h) mit Pumpe (24) unter einen Druck von 90 bar gesetzt, im Wärmetauscher (9) auf 177 °C vorgewärmt und durch die Heizschlange im Abhitzekessel (10) geleitet.

Die Trockenkohle/Kalkhydrat-Mischung wird im Herdofen (11) mit 122.130 m³/h (bei 1,013 bar und 273,15 K) Luft verkokt bzw. calciniert, wobei eine Mischung aus 23,51 t/h Koks und 14,74 t/h CaO entsteht und dem Sauerstoff-thermischen Carbidofen (17) zugeführt wird. Unter Einblasung von 13.789 m³/h (bei 1,013 bar und 273,15 K) Sauerstoff (98%) entstehen dort 12,82 t/h Calciumcarbid (Normalcarbid mit 80 Gew.-% CaC₂) sowie 37.069 m³/h (bei 1,013 bar und 273,15 K) Abgas von 600 °C. Aus dem Abgas werden im Heisszyklon (19) 4,16 t/h Staub abgeschieden und in das Verfahren zurückgeführt. Nach Durchströmen des Wärmetauschers (9) hat das Abgas noch eine Temperatur von 200 °C. Das Carbid wird in der Karbidvergasung (21) mit Wasser zu 3.846 m³/h (bei 1,013 bar und 273,15 K) Acetylen vergast, wobei 19,9 t/h Rückkalk mit 2 Gew.-% Restfeuchte anfallen, die über Transportleitung (4) zwecks Mischung mit zerkleinerter Rohkohle im Kreis geführt werden.

Die heissen Abgase des Herdofens (11) heizen das durch die Heizschlange im Abhitzekessel (10) strömende Speisewasser (180 t/h, 177 °C, 90 bar) auf 492 °C auf, so dass es als überhitzter Hochdruckdampf vorliegt, mit dessen Hilfe via Gegendruckturbine (6) und Generator (15) 19,1 Megawatt Überschussstrom erzeugt und via Tieftemperaturzerlegung (16) 79.451 m³/h (bei 1,013 bar und 273,15 K) Luft in 13.789 m³/h O₂ und 65.662 m³/h N₂ zerlegt werden. Auf der Gegenseite der Turbine (6) fallen 180 t/h Niederdruckdampf von 180 °C und 5 bar an, wovon 108,6 t/h in die Trockenzone (5) gelangen. Die restlichen 71,4 t/h strömen über Leitung (14) einer weiteren Turbine mit Generator zu, wodurch 4,27 Megawatt Überschussstrom erzeugt werden. Insgesamt fallen bei diesem Verfahren 19,10 + 4,27 = 23,37 MW Strom an.

Beispiel 2

(Vergleichsbeispiel gemäss DE-A-29 25 897) Man arbeitet wie in Beispiel 1, jedoch ohne Zumischung von Kalkhydrat zur gemahlenen Rohbraunkohle. Die Rückkalk-Leitung (4) entfällt somit. Stattdessen werden 14,74 t/h CaO direkt in den Ofen (17) zugegeben. Zum Trocknen und Erwärmen der Kohle in der Trockenzone (5) genügen 106,6 t/h Niederdruckdampf, so dass auch nur 106,6 t/h Kondensat über Leitung (8) abgezogen werden. Über Leitung (23) werden 86,4 t/h Speisewasser zugeschlagen und das Gemisch (193 t/h) wie in Beispiel 1 weiterbehandelt. Im Generator (15) werden 20,9 MW Strom erzeugt. Der Rest des Niederdruckdampfes (86,4 t/h, 180 °C, 5 bar, entsprechend 5,17 MW Strom) verlässt die Anlage über Leitung (14). Insgesamt fallen bei diesem Verfahren 20,90 + 5,17 = 26,07 MW Strom an.

Die Differenz von 26,07 MW (Beispiel 2) minus 23,37 MW (Beispiel 1) = 2,70 MW (= 9,7 Giga-Joule/h) reicht demnach zur vollständigen Dehydratisierung und Vorwärmung von Kalkhydrat gemäss vorliegender Erfindung aus. Unter der Annahme von 2% Restfeuchte im Calciumhydroxid sind für die gleichen Umwandlungen und Vorwärmungen gemäss dem Stand der Technik etwa 39 Giga-Joule/h anzusetzen.

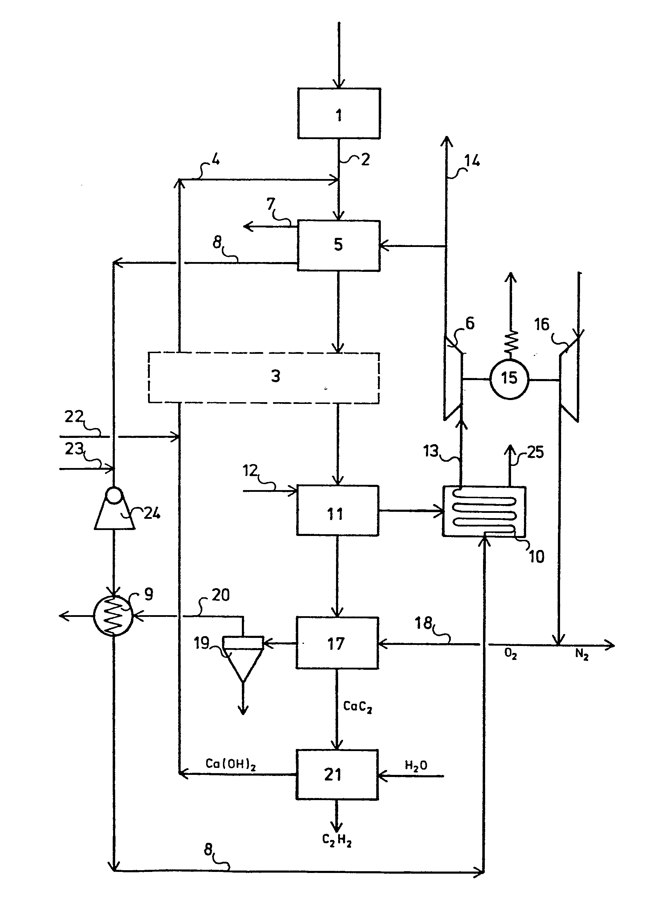

## Patentansprüche

1. Verfahren zur Herstellung von Calciumcarbid durch Umsetzung von überschüssigem Koks mit gebranntem Kalk in Gegenwart von Sauerstoff in einem Sauerstoff-thermischen Ofen, dadurch gekennzeichnet, dass man Braunkohle als Ausgangsstoff für Koks und Kalkhydrat (Ca(OH)$_2$) oder Kalkstein (CaCO$_3$) als Ausgangsstoff für gebrannten Kalk, beide in vorgebrochener Form, mischt, die Mischung in einer Trockenzone bei 80 bis 120 °C von anhaftendem Wasser befreit und das warme Trockengut unmittelbar einem Calcinator zuführt, worin man unter Zuleitung von Luft bei Temperaturen von 900 bis 1400 °C den Braunkohleanteil verkokt und zugleich den Kalkanteil dehydratisiert bzw. decarbonisiert; dass man die thermisch vorbehandelte Mischung der Ausgangstoffe mit der ihr innewohnenden Temperatur von 900–1000 °C unmittelbar dem Sauerstoff-thermischen Ofen zuführt und dort in Gegenwart von Sauerstoff zu Calciumcarbid umsetzt; dass man die Abwärme des Calcinators zur Erzeugung von überhitztem Hochdruckdampf aus Kesselspeisewasser verwendet, und dass man mit dem überhitzten Hochdruckdampf eine Turbine betreibt, welche sowohl zur Tieftemperaturzerlegung von Luft zwecks Gewinnung des zum Betrieb des Sauerstoff-thermischen Ofens erforderlichen Sauerstoffs als auch zur Stromerzeugung eingesetzt wird, wobei auf der Gegenseite der Turbine heisser Niederdruckdampf anfällt, der mindestens teilweise der Trockenzone zur Trocknung der gemischten Ausgangsstoffe zugeleitet wird.

2. Verfahren nach Anspruch 1, dadurch gekennzeichnet, dass man als Calcinator einen Herdofen einsetzt.

3. Verfahren nach Anspruch 1 oder 2, dadurch gekennzeichnet, dass man grubenfeuchte Braunkohle vor dem Zusammenmischen mit dem Kalk auf eine Korngrösse von 0–10 mm zerkleinert.

4. Verfahren nach einem der Ansprüche 1–3, dadurch gekennzeichnet, dass man das Kalkhydrat oder den Kalkstein in einer Korngrösse von 0–10 mm einsetzt.

5. Verfahren nach einem der Ansprüche 1–4, dadurch gekennzeichnet, dass man in der Trokkenzone anfallendes Kondensat abzieht, mit den Abgasen des Sauerstoff-thermischen Ofens vorwärmt und als Kesselspeisewasser zur Erzeugung überhitzten Hochdruckdampfes mit Hilfe der Abwärme des Calcinators verwendet.

6. Verfahren nach einem der Ansprüche 1–5, dadurch gekennzeichnet, dass man das bei der Umsetzung von Carbid mit Wasser unter Bildung von Acetylen anfallende Kalkhydrat als Ausgangsstoff für gebrannten Kalk, gegebenenfalls nach Brikettierung, in das Verfahren zur Herstellung von Carbid zurückführt und mit der vorgebrochenen Kohle noch vor Eintritt in die Trockenzone mischt.

## Revendications

1. Procédé de préparation de carbure de calcium par réaction d'un excès de coke avec de la chaux vive en présence d'oxygène dans un four oxyhénothermique, caractérisé en ce que l'on mélange du lignite comme matière de départ pour le coke avec de l'hydrate de chaux (Ca(OH)$_2$) ou de la pierre à chaux (CaCO$_3$) comme matière de départ pour la chaux vive, les deux composants sous forme grossièrement concassée; on débarrasse le mélange dans une zone de séchage à 80–120 °C de l'eau adhérente et on introduit directement le matériau chaud dans un calcinateur, dans lequel on cokéfie le composant lignite à des températures de 900–1400 °C avec apport d'air et on déshydrate ou bien décarbonise simultanément le composant chaux; on introduit directement à sa température propre de 900–1000 °C le mélange des matières de départ ainsi traité thermiquement dans le four oxygénothermique, dans lequel on le convertit en présence d'oxygène, en carbure de calcium; on utilise la chaleur perdue du calcinateur pour la production de vapeur haute pression surchauffée à partir d'eau d'alimentation de chaudière et on fait fonctionner avec la vapeur haute pression surchauffée une turbine employée aussi bien pour la dissociation de l'air à basse température pour produire l'oxygène nécessaire pour le fonctionnement du four oxygénothermique que pour la production de courant avec formation, du côté opposé de la turbine, de vapeur basse pression chaude qui est au moins partiellement amenée à la zone de séchage pour sécher le mélange des matières de départ.

2. Procédé selon la revendication 1, caractérisé en ce que l'on utilise un four Martin comme calcinateur.

3. Procédé selon la revendication 1 ou 2, caractérisé en ce que l'on fragmente du lignite humide de mine en particules d'une granulométrie de 0–10 mm avant de le mélanger avec la chaux.

4. Procédé selon l'une des revendication 1–3, caractérisé en ce que l'on utilise l'hydrate de chaux ou la pierre à chaux sous forme de particules d'une granulométrie de 0–10 mm.

5. Procédé selon l'une des revendications 1–4, caractérisé en ce que l'on soutire du condensat obtenu dans la zone de séchage, on le préchauffe par les gaz de sortie du four oxygénothermique et on l'utilise comme eau d'alimentation de chaudière pour la production de vapeur haute pression surchauffée à l'aide de la chaleur perdue du calcinateur.

6. Procédé selon l'une des revendications 1–5, caractérisé en ce que l'on renvoie, éventuellement après agglomération, dans le procédé de préparation du carbure, comme matière de départ pour la chaux vive, l'hydrate de chaux formé lors de la réaction du carbure avec l'eau avec formation d'acétylène et on le mélange encore en amont de la zone de séchage avec le lignite concassé grossièrement.

## Claims

1. Process for making calcium carbide by reacting an excess of coke with quicklime in the presence of oxygen in an oxygen-thermal furnace, which comprises: using precrushed lignite as a starting material for coke and precrushed lime hydrate ($Ca(OH)_2$) or precrushed lime-stone ($CaCO_3$) as a starting material for quicklime; mixing the precrushed materials, introducing the resulting mixture into a drying zone and freeing it therein at 80° to 120 °C from adhering water; directly introducing the warm material into a calcining apparatus in which the lignite constituent is coked at temperatures of 900–1400 °C with admission of air and the lime constituent is simultaneously dehydrated or decarbonized therein; directly delivering the thermally-pretreated mixture of starting materials with an inherent temperature of 900° to 1000 °C to the oxygen-thermal furnace and reacting it with oxygen to produce calcium carbide therein; using the waste heat originating from the calcining apparatus for the generation of superheated high pressure steam from boiler feed water; using the superheated high pressure steam for operating a turbine, the latter being used for the liquefaction of air and separation into its components at low temperature so as to obtain the oxygen necessary for operating of the oxygen-thermal furnace, and also for the generation of electrical power, hot low pressure steam issuing through the turbine's opposite side being introduced at least partially into the drying zone for drying the mixture of starting materials therein.

2. Process as claimed in claim 1, wherein a hearth furnace is used as the calcining apparatus.

3. Process as claimed in claim 1, wherein moist mine lignite is crushed to material with a size of 0–10 mm and the crushed material is mixed with lime.

4. Process as claimed in any of claims 1 to 3, wherein the lime hydrate or limestone is used in the form of particles with a size of 0–10 mm.

5. Process as claimed in any of claims 1 to 4, wherein condensate obtained in the drying zone is taken therefrom, preheated by means of off-gases originating from the oxygen-thermal furnace, and used as boiler feed water for the generation of superheated high pressure steam by means of waste heat originating from the calcining apparatus.

6. Process as claimed in any of claims 1 to 5, wherein lime hydrate obtained on reacting the carbide with water to form acetylene is recycled, if desired after having been briquetted, to the carbide production stage as a starting material for making quicklime, and mixed with the precrushed lignite still ahead of the drying zone.